# EUROPÄISCHE PATENTSCHRIFT

(11) **EP 1 265 966 B1**
(45) Veröffentlichungstag und Bekanntmachung des Hinweises auf die Patenterteilung: **10.05.2006**
(21) Anmeldenummer: 01938034.4
(22) Anmeldetag: 23.03.2001
(51) Int. Cl.: C09D 5/00, C09D 7/12, C10M 171/00, C09K 3/10

(54) **BESCHICHTUNGSMASSEN MIT ANTIFRESSEIGENSCHAFTEN FÜR LÖSBARE HÜLSEN-BOLZEN- UND/ODER GEWINDEVERBINDUNGEN**
COATING MATERIALS HAVING ANTI-SEIZING PROPERTIES FOR DETACHABLE BUSH-BOLT AND/OR THREADED CONNECTIONS
PRODUITS DE REVETEMENT A PROPRIETES ANTIGRIPPANTES POUR JONCTIONS AMOVIBLES MANCHONS-BOULONS ET/OU FILETAGES

(30) Priorität: 24.03.2000 US 534752
(43) Veröffentlichungstag der Anmeldung: 18.12.2002
(73) Patentinhaber: OMNITECHNIK MIKROVERKAPSELUNGS-GMBH, 80993 München (DE)
(72) Erfinder: HINTERWALDNER, Rudolf, 85665 Moosach (DE); KONAT, Karol, 81547 München (DE); TRÜBENBACH, Thomas, 82110 Germering (DE); WECKERLE, Anselm, 82256 Fürstenfeldbruck (DE)
(74) Vertreter: Kinzebach, Werner
(86) Internationale Anmeldenummer: PCT/EP2001/003309
(87) Internationale Veröffentlichungsnummer: WO 2001/070918

(56) Entgegenhaltungen:
- GB-A- 1 035 566
- US-A- 4 104 073
- DATABASE WPI Section Ch, Week 198225 Derwent Publications Ltd., London, GB; Class A18, AN 1982-50936E XP002185981 & JP 57 076061 A (SUMITOMO CHEM CO LTD), 12. Mai 1982 (1982-05-12)

## Beschreibung

Gegenstand vorliegender Patentanmeldung sind Beschichtungsmassen mit Antifresseigenschaften für lösbare Hülsen-Bolzen- und/oder Gewindeverbindungen.

Die Anforderungen an das Sichern und Dichten von Hülsen-Bolzen- und Gewindeverbindungen jeglicher Art werden infolge erhöhter Produkthaftungen und -sicherheiten weltweit immer höher. Da die Funktionen "Sichern" und/oder "Dichten", insbesondere bei strukturellen Gewindeverbindungen, über unterschiedlich lange Lebenszyklen zu gewährleisten sind, sind die Eigenschaften der polymeren Gewindesicherungs- und -dichtmittel den divergierenden Belastungen durch Umwelt, Alterung, Chemikalien und/oder Temperaturen anzupassen, damit sie gegebenenfalls lösbar bleiben. Lösbare Hülsen-Bolzen- und Gewindeteilpaarungen, die mit polymeren Massen gesichert und abgedichtet sind, müssen darüber hinaus spezifische Losbrech- und Weiterdrehmomente besitzen, wie es in Normen, Spezifikationen und dergleichen vorgeschrieben ist. Solche Forderungen finden sich u.a. im Maschinen-, Land-, Luft- und Seefahrzeugbau und in jüngerer Zeit auch im Bauwesen.

Dagegen ist das Lösen und Weiterdrehen von spaltverfüllten Hülsen-/Bolzen- und Gewindeverbindungen weiterhin sehr problematisch und nicht praxisgerecht gelöst. Die Ursachen dazu sind z. B. im Festfressen der Hülsen-Bolzen- und/oder Gewindeteilpaarungen in den abgebundenen Polymermassen in den Spalten gegeben. Dieses Fressen ist auch bei "Unterkopf"-Schlüssen, z. B. beim Schrauben-Kopf, gegeben. Weitere negative Einflussgrößen entstehen beim Spaltverfüllen mit polymeren Massen dann, wenn sich
- Form- und Reibschluss mit ausreichenden Kohäsionsfestigkeiten und oder
- Stoffschluss über adhäsive Bindekräfte an den Grenzflächen ausbilden. In Abhängigkeit davon tritt beim Lösen und Weiterdrehen unterschiedlich starkes Fressen ein.

Da festgefressene Hülsen-Bolzen- und/oder Gewindeverbindungen von Elementen, Werkstücken, Vorrichtungen und dergleichen in der industriellen, gewerblichen und handwerklichen Praxis aus vielerlei Gründen nicht wiederverwendbar sind, müssen sie durch teure Neuteile ersetzt werden, deren Beschaffung zeit- und kostenaufwendig ist. Dies sind insbesondere für die Reparatur- und Wartungsbereiche in den unterschiedlichsten Branchen essentielle Nachteile, vor allem bei Gewindeteilpaarungen aus hochwertigen Werkstoffen, z.B. Edelstählen und Sonderanfertigungen. Zusätzliche Nachteile sind beim Wertstoffrecycling gegeben, sofern die Verbundelemente aus unterschiedlichen Werkstoffen bestehen.

Es hat in der Vergangenheit nicht an Bemühungen bei Herstellern von Gewindesicherungs- und -dichtmitteln gefehlt, geeignete Produkte mit Antifresseigenschaften für die handwerkliche, gewerbliche und industrielle Praxis zu entwickeln. Dabei versuchte man u.a.:
- über reibwertmindernde Additive, wie z.B. Pulvern aus Graphit, Molybdändisulfid, Polyolefin und Polytetrafluorethylen, an den Grenzflächen spezifische Gleiteigenschaften zu erzeugen, die nach dem Losbrechen und anschließendem Weiterdrehen der Gewindeverbindung nicht zum Fressen neigen. Solche Additive mussten als alleinige Antifressmittel jedoch verworfen werden, weil keine ausreichende Gewindesicherung gewährleistet war;
- mittels Wachsüberzügen auf der Oberfläche der mit einer Sicherungs- und Dichtmasse vorausgerüsteten Gewinde die Gleitfähigkeit zu verbessern und zu erhalten (EP 0 480 103 A1).

Allein diese Tatsachen und Erkenntnisse demonstrieren, dass reibwertvermindernde Stoffe als alleinige Antifressmitteladditive in spaltfüllenden Polymermassen für Hülsen-Bolzen- und/oder Gewindeverbindungen nicht geeignet sind, weil sie primär als Schmier- und Gleitmittel wirken.

Die üblichen Bindemittel in Beschichtungsmassen, die zum Verfüllen und Dichten von Spalten und/oder Gewindeteilpaarungen eingesetzt werden, führen zum Fressen beim Lösen und Weiterdrehen solcher Verbindungen. Dies ist u.a. in der Polymermatrix des Bindemittels begründet, weil sie sich
a) beim Verbauen und Abbinden und/oder
b) durch Funktionsbeanspruchungen mit Langzeitalterung, Chemikalien-, Wasser- und/oder Temperaturexpositionen
in einem solchen Maße verändern, dass beim Lösen und Weiterdrehen ein Fressen erfolgt oder begünstigt wird.

Diese Tatsachen sind besonders dann zu beobachten bzw. gegeben, wenn die Temperaturbelastungen > 250 °C, > 300 °C, oder > 400 °C über Stunden, Tage, Monate und mehr betragen. Bei den hohen Temperaturen und langen Belastungszeiträumen ist die organische Bindemittelmatrix abgebaut, im Spalt verkohlt und oftmals "gesintert". Gerade diese "Verkokungsrückstände" begünstigen zusätzlich das Fressen beim Lösen und Weiterdrehen.

Die US 4,104,073 beschreibt beispielsweise einen feuerhemmenden, sich aufblähenden Kitt, der für luft- und rauchdichtes Abdichten von Durchlässen, Wandverbindungen etc. brauchbar ist. Bei Erhitzen schäumt der Kitt auf und bildet eine geschäumte, kohlenstoffhaltige, feuerhemmende Schicht, so dass er insbesondere zum Abdichten von Kabeldurchlässen in Feuerschutzwänden geeignet ist. Dagegen ist der Kitt nicht so beschaffen, dass er Form- und Reibschluss oder Stoffschluss beim Verbinden von Hülsen und Bolzen oder Gewinden bewirkt und die Verbindung auch nach extremen Beanspruchungen wieder lösbar ist, so dass kein Fressen der Verbindungen erfolgt.

In der Patentliteratur sind zwar Klebstoffe zur Herstellung lösbarer Klebverbindungen beschrieben. Jedoch lassen sich diese Aufgaben und Funktionen der abgebundenen Klebschichten in der Klebfuge nicht auf die abgebundenen Polymerschichten in den Spalten der Hülsen-Bolzen- und/oder Gewindeteilpaarungen übertragen. Während bei lösbaren Klebverbindungen zum Lösen die Schwächung der Adhäsionskräfte an den Grenzflächen und/oder der Kohäsionsfestigkeiten in der Klebschicht entscheidend ist, um einen Fügeteilpartner leicht trennen zu können, ist dies bei abgebundenen Spaltfüllmassen nicht der Fall. Die Probleme beim Lösen und/oder Weiterdrehen von Hülsen-Bolzen- und/oder Gweindeteilpaarungen beginnen erst bei diesem Vorgang mit dem Zerstören der abgebundenen Spaltfüllmasse im Ringspalt, weil sich die Teile ineinander festfressen, verkeilen und die zerstörte Spaltfüllmasse im Allgemeinen zusätzlich einen hohen Reibbeiwert verursacht.

Mit wärmehärtbaren Klebstoffen auf Epoxidharzbasis, wie sie in den Patentanmeldungen DE-A 29 48 405 und DE-A 30 21 263 beschrieben sind, lässt sich schon aus Wirtschaftlichkeits- und Handlingsgründen insbesondere bei Massengütern die Aufgabe nicht lösen. Dies gilt vorzugsweise für eine Klebstofffolie, wie dem sogenannten "Folienkleber FM 123-5" der American Cyanamid Co., der ohnehin nur unter Kühlung (< -5 °C) lagerfähig und transportabel ist.

Die DE 198 33 847 A beschreibt die Lösung von Klebeverbindungen durch thermische Freisetzung von Gasen in der Klebeverbindung. Bei Klebeverbindungen, z.B. bei einem Laminat, tritt das Problem des Fressens naturgemäß nicht auf. Auch mit den Vorschlägen der DE-A-198 33 847 lassen sich keine spaltfüllenden Polymermassen bewerkstelligen, die beim Lösen und Weiterdrehen nicht fressen, nicht verkeilen und ausreichende Gleiteigenschaften an den jeweiligen Grenzflächen besitzen. Darüber hinaus müssen Klebfugen so gestaltet sein, dass die abgebundenen Klebschichten gleichmäßig Kräfte aufnehmen bzw. übertragen können. Die Klebfugen müssen so dimensioniert sein, dass sich möglichst eine dünne, homogene Klebschicht im Fugenraum ausbilden kann, damit die Spannungsspitzen im Klebverbund klein bleiben. Demgegenüber ist bei Hülsen-Bolzen- und Gewindeteilpaarungen mit unterschiedlichen Spalttoleranzen zu rechnen, wodurch an eine spaltfüllende Polymermasse andere Anforderungen im Vergleich zu einem Klebstoff gestellt werden. Der Vorschlag der DE 198 33 847 A ist daher für Hülsen-Bolzen- oder Gewindeverbindungen nicht geeignet.

Der vorliegenden Erfindung liegt die Aufgabe zugrunde, eine Beschichtungsmasse bereitzustellen, die einerseits zum Verfüllen, Dichten und/oder Sichern von Hülsen-Bolzen- und/oder Gewindeteilpaarungen geeignet ist und die andererseits beim Lösen und/oder Weiterdrehen dieser Paarungen die Gefahr des Fressen und Verkeilens verringert.

Überraschenderweise wurde nun gefunden, dass die Aufgabe mit einer Beschichtungsmasse gelöst wird, die neben einem für die Spaltverfüllung bei Hülsen-Bolzen- und/oder Gewindeteilpaarungen geeignet en Bindemittel ein Antifressmittel, das bei Temperaturerhöhung Gase freisetzt, und ein reibwertminderndes Additiv enthält.

Gegenstand der vorliegenden Erfindung ist daher eine Beschichtungsmasse zum Füllen, Dichten und/oder Sichern von lösbaren Hülsen-Bolzen- und/oder Gewindeteilpaarungen, die Antifresseigenschaften aufweist und die enthält:
a) mindestens ein chemisch reagierendes und/oder inertes (physikalisch abbindendes) Bindemittel,
b) mindestens eine bei erhöhter Temperatur Gase freisetzende Substanz,
   ausgewählt unter Tetrazolen, Benzoxazinen, Peroxoverbindungen, Persäuren und Salzen davon, anorganischen Carbonaten und Hydrogencarbonaten, Explosivstoffen und Alkalimetall- und Ammoniumaziden, Malonsäure, α-Ketocarbonsäuren, β-Ketocarbonsäuren, α,α,α-Trihalogencarbonsäuren, Glyceridcarbonsäuren, β,γ-ungesättigten Carbonsäuren, β-Hydroxycarbonsäuren, β-Lactonen und Carbonsäureanhydriden,
c) mindestens ein reibwertminderndes Additiv und
d) gegebenenfalls weitere übliche Zusatzstoffe.

### Komponente a)

Die Bindemittel a) sind chemisch reagierende Monomere oder Polymere und/oder physikalisch abbindende Polymere. Die chemisch reagierenden Bindemittel sind kalt-, warm- und/oder strahlenhärt- bzw. -vernetzbar, z.B. durch Polyaddition, Polymerisation und/oder Polykondensation. Soweit es sich um Polymere oder Copolymere handelt, weisen diese im Allgemeinen ein relativ niedriges Molekulargewicht im Bereich von etwa 300 bis etwa 25000 auf. Reaktive Bindemittel sind insbesondere Verbindungen mit ethylenisch ungesättigten Gruppen, beispielsweise (Meth)acrylester, Allylester, ungesättigte Polyester, (Meth)acrylharze, Epoxidharze, Polyisocyanate, Polyurethane, Polysulfide, Silicone etc.

Mit den reaktiven Bindemitteln lassen sich sogenannte Ein-, Zwei- und Mehrkomponentensysteme formulieren, die unter den jeweiligen Anwendungsbedingungen reaktiviert werden und härten bzw. vernetzen. Bevorzugt sind solche Bindemittel, die unter anaeroben Bedingungen härten, beispielsweise die Monomeren oder Polymeren mit ethylenisch ungesättigten Gruppen, Epoxidharze, Isocyanatgruppen-haltige Polyurethane, etc. Die reaktiven Schmelzmassen nehmen in dieser Gruppe eine Sonderstellung ein, weil sie sowohl physikalisch als auch chemisch mittels Luftfeuchtigkeit abbinden. Sie werden vorzugsweise lösemittelfrei verarbeitet. Auf dieser Grundlage lassen sich auch sogenannte reaktive "1-K-Systeme" (Einkomponentensysteme) formulieren, wobei mindestens eine der Reaktionskomponenten mikroverkapselt vorliegt und erst unter Applikationsbedingungen die Mikrokapseln zerstört werden und die Abbindereaktion initiiert wird. Die mikroverkapselten Systeme eignen sich in vorteilhafter Weise für die Vorausrüstung der Gewinde mit den erfindungsgemäßen Beschichtungsmassen.

Bei den physikalisch abbindenden Systemen liegen die Polymere bereits in ihren polymeren Endzuständen vor und werden aus ihren Lösungen, Dispersionen und/oder Schmelzen verarbeitet. Dabei werden wässrige Lösungen und Dispersionen bevorzugt. Bei den physikalisch abbindenden Bindemitteln handelt es sich insbesondere um thermoplastische Polymere, die bereits ein relativ hohes Molekulargewicht besitzen, das im Allgemeinen im Bereich von 5 000 bis 500 000 liegt. Beispiele hierfür sind Polyolefine, gesättigte Polyester, Poly(meth)acrylate Polyamide, Polyimide, Vinylpolymere, Polyurethane, Polyvinylhalogene, Polycarbonate und Copolymere davon. Diese Polymere können Einheiten mit einpolymerisiert enthalten, welche funktionelle Gruppen, wie Hydroxyl-, Carboxyl- oder Aminogruppen aufweisen. Die funktionellen Gruppen erhöhen die Polarität und verstärken damit die adhäsiven Kräfte zwischen Bindemittel und dem Material des Gewindes. Geeignete Einheiten mit funktionellen Gruppen sind z.B. (Meth)acrylsäure, Hydroxyethyl(meth)acrylat oder Aminoethyl(meth)acrylat. Zu inerten Bindemitteln zählen auch nicht reaktive Schmelzstoffe. Es werden solche bevorzugt, deren Schmelz- und Erweichungsbereich mindestens 10 °C unter der Zersetzungstemperatur der Gase freisetzenden Substanzen liegt.

Darüber hinaus sind auch anorganische Bindemittel geeignet, die vorzugsweise in hochtemperaturbeständigen Beschichtungsmassen eingesetzt werden. Derartige Bindemittel sind insbesondere hydraulisch abbindende Stoffe, wie Zemente aller Art, Kalk, Gips, Wassergläser, insbesondere Natrium- und/oder Kaliumwassergläser mit Gewichtsverhältnissen von SiO₂: M₂O im Bereich von 20 : 5 bis 40 : 15 Gew.-Teilen (M = Na, K, Li). Brauchbare anorganische Bindemittel sind auch die in der EP-A-246 564 beschriebenen Bindemittel auf Basis von Natriumsilicat und Aluminiumoxid.

Zur Vereinfachung wird im Folgenden im Allgemeinen von "Abbinden" gespochen. Darunter ist sowohl das physikalische Abbinden, wie Abdampfen von Lösemittel, Wasser oder dergleichen, das Abkühlen der Schmelzmassen als auch das chemische Erhärten, Vernetzen und dergleichen bei den chemisch reagierenden Rückgratbindemitteln zu verstehen.

### Komponente b)

Mit der Komponente b) lassen sich in der polymeren Masse Schaumstrukturen bzw. poröse Strukturen erzeugen, welche ein Lösen und/oder Weiterdrehen der Gewindeteilpaarung ohne die Gefahr des Fressens oder Verkeilens erlauben.

Bei der Komponente b) handelt es sich um niedermolekulare, anorganische, metallorganische oder organische, bei Raumtemperatur feste Substanzen, die bei Temperaturerhöhung spontan Gase freisetzen, indem sie sich zersetzen und/oder Umsetzungsreaktionen initiieren und/oder Initialzündungen auslösen derart, dass mindestens eines der Zersetzungs-und/oder Spaltprodukte ein Gas ist. Dabei soll die Gasausbeute vorzugsweise bei ≥ 50 ml/g, insbesondere ≥ 70 ml/g und besonders bevorzugt ≥ 90 ml/g Substanz liegen. Die Temperatur, bei welcher die Komponente b) Gase freisetzt, ist im allgemeinen ≥ 50°C, insbesondere > 80°C und bevorzugt ≥ 100°C. Das freigesetzte Gas bewirkt die Ausbildung von Schaumstrukturen bzw. porösen Strukturen in der abgebundenen Beschichtungsmasse, die das Lösen der Teile erleichtern und das Fressen und Verkeilen beim Weiterdrehen verhindern bzw. erschweren.

Die Wahl der bei erhöhter Temperatur Gase freisetzenden Substanz erfolgt nach den Bedingungen beim Aufbringen und Abbinden der Beschichtungsmasse und den Betriebsbedingungen, denen das mit der Beschichtungsmasse ausgerüstete Bauteil unterzogen wird. In den meisten Fällen wählt man die Substanz so, daß sie unter den Bedingungen beim Aufbringen und Abbinden der Beschichtungsmasse und unter den Betriebsbedingungen des Bauteils im wesentlichen keine Gase freisetzt, sondern erst bei einer Temperatur, die höher ist als die Temperatur beim Aufbringen und Abbinden bzw. im Betriebszustand. Vorzugsweise ist diese Temperatur mindestens 20 °C und insbesondere mindestens 50 °C höher als die höchste Temperatur, mit welcher die Substanz beim Aufbringen und Abbinden der Beschichtungsmasse oder im Betrieb des Bauteils belastet wird.

Bei einer Reihe von Sonderfällen, wie z.B. bei verfüllten Spalten, die unter Betriebsbedingungen sehr hohen Temperaturen (250 bis 1000 °C) ausgesetzt sind, hat es sich als vorteilhaft erwiesen, wie überraschenderweise gefunden wurde, wenn bereits beim Abbinden und/oder Erreichen der Betriebsbedingungen mindestens partielle Mengen der Gase freisetzender Substanzen zerstört werden. Bereits eine partiell vorhandene poröse Struktur begünstigt das Lösen und Weiterdrehen - auch nach Langzeittempern - und reduziert das Fressen und Verkeilen.

Die bei Temperaturerhöhung Gase freisetzenden Substanzen können in Form reiner Stoffe oder in Form von Stoffgemischen eingesetzt werden. Im Falle von Stoffgemischen können die einzelnen Komponenten inert sein und erst im Gemisch eine Gase bildende Reaktion auslösen. Hierbei ist eine der Komponenten bevorzugt mikroverkapselt, wobei die Teilchengröße der Mikrokapseln < 100 µm, insbesondere < 50 µm ist.

Eine möglichst homogene Gasblasenbildung im Spalt der Gewindeverbindung ist erwünscht, weil dadurch der Lösevorgang unterstützt wird. Dies gilt insbesondere dann, wenn die Beschichtungsmasse beim Abbinden nicht nur zum Formschluss, sondern auch zum Stoffschluss über adhäsive Bindungskräfte an den Grenzflächen im Spalt geführt hat. Um homogene Gasblasenbildung zu erhalten, wird die Komponente b) möglichst gleichmäßig in der Beschichtungsmasse verteilt.

Die Menge an Komponente b) ist stoff- und applikationsabhängig und wird zusätzlich von dem bei der Zersetzung freiwerdenden Gasvolumen mitbestimmt. Die Menge muss einerseits ausreichen, um die wirksame Ausbildung von Schaumstrukturen oder porösen Strukturen in der ausgehärteten Beschichtungsmasse zu bewirken. Andererseits darf sie nicht so hoch sein, dass die Sicherungs- und Dichteigenschaften der Beschichtungsmasse negativ beeinflusst werden. Im Allgemeinen liegt die Menge an Komponente b) im Bereich von 0,5 Gew.-% bis 50 Gew.-%, vorzugsweise 1 Gew.-% bis 25 Gew.-%, bezogen auf den Feststoffanteil aus Bindemitteln und, wenn vorhanden, Füllstoff. Eine Sonderstellung nehmen die anorganischen, Gase freisetzenden Stoffe --infolge ihrer höheren spezifischen Gewichte - ein. Hierbei können Zusatzmengen bis zu 100 Gew.-%, bezogen auf Feststoffanteile, zur Anwendung kommen.

Bei der Komponente b) handelt es sich insbesondere um Treibmittel bzw. Blähmittel, wie sie aus der Schaumstoffindustrie bekannt sind. Erfindungsgemäß kommen insbesondere solche Komponenten b) zur Anwendung, die als Gase im Wesentlichen Stickstoff, Kohlendioxid und/oder Kohlenmonoxid, entwickeln. Als Komponente b) brauchbar sind beispielsweise:
(1) Tetrazole, wie 5-Phenyltetrazol.
(2) Benzoxazine.
(3) Carbonsäure und Carbonsäurederivate, wie Malonsäure, α-Ketocarbonsäuren, β-Ketocarbonsäuren, α,α,α-Trihalogencarbonsäuren, Glyceridcarbonsäuren, β,γ-ungesättigte Carbonsäuren, β-Hydroxycarbonsäuren, β-Lactone oder Carbonsäureanhydride, wie Isatosäureanhydrid.
(4) organische Peroxoverbindungen, wie Peroxycarbonsäuren, beispielsweise Peroxyessigsäure oder Peroxybenzoesäure, und deren Alkalimetall- und Ammoniumsalze. Die Peroxoverbindungen kommen bevorzugt in mikroverkapselter Form zur Anwendung.
(5) Anorganische Carbonate und Hydrogencarbonate, insbesondere Alkali- und Erdalkalimetallcarbonate, wie Natriumcarbonat, Calciumcarbonat, und Alkali- oder Erdalkalimetallhydrogencarbonate, wie Natriumhydrogencarbonat, Calciumhydrogencarbonat sowie Ammoniumcarbonat und Ammoniumhydrogencarbonat. Bei Einsatz von anorganischen Carbonaten und Hydrogencarbonaten sind höhere Temperaturen zur Gasabspaltung erforderlich als bei den oben erwähnten organischen Verbindungen. Diese Temperaturen liegen im Allgemeinen bei >400°C, vorzugsweise >500°C und insbesondere > 600°C.
(6) Anorganische Peroxosäuren und deren Salze, wie Alkalimetallperoxocarbonate und Alkalimetallperoxosulfate.
(7) Explosivstoffe, wie die Nitrate von Glycerin, Ethylenglycol, Diethylenglycol, Pentaerythrit und Ethylendiamin, Nitrocellulose, Trinitrotoluol, Pikrinsäure, Tetryl, Hexogen, Octogen, Nitroguanidin, Ammoniumperchlorat und Methylaminnitrat, sowie Alkalimetall- und Ammoniumazide. Besonders bevorzugt kommen die Explosivstoffe in mikroverkapselter Form zur Anwendung. Besonders bevorzugte Explosivstoffe sind Hexogen (Hexahydro-1,2,3-trinitrö-1,3,5-triazin), Pikrinsäure (2,4,6-Trinitrophenol) und Tetryl (N-Methyl-N, 2,4,6-Tetranitroanilin). Weitere brauchbare Explosivstoffe sind in Ullmanns Encyclopedia of Industrial Chemistry, Bd. A10, S. 143 ff., 1987, beschrieben.
(8) Beim Erwärmen expandierende Stoffe, die im Allgemeinen in Form von Mikrospheren vorliegen, beispielsweise das unter der Marke "Expancel®-Microspheres" erhältliche Handelsprodukt. Diese Mikrospheren basieren auf einer Polyvinylidenchloridhülle und enthalten im Kern monomeres Acrylnitril, (Meth)acrylate und Isobutan als Expansionsmittel. Die Expansion dieser Stoffe wird insbesondere vom Grad der Erwärmung bestimmt. Die expandierenden Stoffe können als Zusatz zu anderen Komponenten b) verwendet werden.

Bevorzugte Komponenten b) sind die oben unter (3), (4), (5), und (7) angegebenen Verbindungen.

Die Temperatur, bei welcher die Gasentwicklung der Komponente b) erfolgt, hängt von der betreffenden Substanz ab und kann in einem weiten Bereich variieren. Zusätzlich kann die Temperatur durch Zusätze wie Metalloxide, beispielsweise Zinkoxid, Titandioxid, Aluminiumoxid etc., modifiziert werden. Auf diese Weise ist es möglich, die Zersetzungstemperatur in gewünschter Weise einzustellen. Für einige der erfindungsgemäß brauchbaren Komponenten b) sind der Zersetzungsbereich und die Gasausbeute in der nachfolgenden Tabelle 1 zusammengestellt. Die Tabelle zeigt, dass durch Wahl der geeigneten Komponente b) die Zersetzungstemperatur nach Bedarf eingestellt werden kann.

**Tabelle 1 Zersetzungsbereich und Gasausbeute von bei Temperaturerhöhung Gase freisetzenden Verbindungen**

| Chemische Bezeichnung | Zersetzungsbereich in Luft [°C] | Gasausbeute [ml/g] |
|---|---|---|
| 5-Phenyltetrazol | 240 bis 250 | 190 |
| Isatosäureanhydrid | 210 bis 225 | 115 |
| Calciumcarbonat | > 400 | ~ 200 |
| Natriumcarbonat | > 100 | ~ 100 |
| Natriumhydrogencarbonat | > 50 | ~ 100 |

Häufig ist es vorteilhaft, die Komponente b) in mikroverkapselter Form einzusetzen. Dies gilt insbesondere für die organischen Peroxoverbindungen, die anorganischen Peroxosäuren und die Explosivstoffe.

### Komponente c)

Das reibwertvermindernde Additiv dient zur Verbesserung des Gleitens an den Grenzflächen der Teile und der Bindemittelpartikel nach dem Losbrechen. Die reibwertvermindernden Additive liegen im Allgemeinen in Form von festen Partikeln vor. Die Partikel der Komponente b) können mit den reibwertvermindernden Additiven auch gecoatet sein. Bevorzugte reibwertvermindernde Additive sind Polyolefine, wie Polyethylen und Polypropylen; fluorierte Polyolefine, wie Polytetrafluorethylen; Graphit; und Metallsulfide, wie Molybdändisulfid.

Die Mengen an reibwertvermindernden Additiven werden, weitgehend von den Applikations- und vorgegebenen Losbrech- und/oder Weiterdrehmomenten bestimmt. Sie liegen im Allgemeinen zwischen 1 und 200 Gew.-%, vorzugsweise 2 bis 150 Gew.-%, insbesondere 5 bis 120 Gew.-%, bezogen auf den Feststoffanteil aus Bindemittel und, soweit vorhanden, Füllstoff. Überraschenderweise hat sich gezeigt, dass durch die Verwendung der Komponenten b) und c) ein Fressen oder Verkeilen der Hülsen-Bolzen- bzw. Gewindeteile beim Losbrechen oder Weiterdrehen im Wesentlichen vermieden wird und die Festigkeit der Hülsen-Bolzen- bzw. Gewindeverbindungen trotz der Anwesenheit der Komponente c) nicht beeinträchtigt wird.

### Komponente d)

Die erfindungsgemäßen Beschichtungsmassen können neben den Komponenten a) - c) weitere übliche Zusatzstoffe als Komponente d) enthalten. Beispiele hierfür sind Lösungsmittel, wie Glykole, Ester, Kohlenwasserstoffe, Netzmittel, Tenside, Verlaufsmittel, Füllstoffe (BaSO₄, CaSO₄, Kaoline, Silikate, Aluminiumoxid, Zinkoxid, Zinkphosphat, Calciumphosphat), Thixotropiemittel, die Rheologie beeinflussende Mittel etc.

Die erfindungsgemäßen Beschichtungsmassen können in einem organischen Lösungsmittel, beispielsweise in einem der obengenannten Lösungsmittel, als wässriges System in Form einer Emulsion, Dispersion oder Lösung oder lösungsmittelfrei, z.B. in Form von Schmelzmassen, vorliegen. Besonders bevorzugt sind lösungsmittelfreie Beschichtungsmassen, wobei man mit Vorteil die monomeren reaktiven Bindemittel als Komponente a) einsetzt. Alternativ können wässrige Beschichtungsmassen mit inerten Polymeren als Bindemittel vorteilhaft zur Anwendung kommen.

Die erfindungsgemäßen Beschichtungsmassen mit Antifresseigenschaften sind sowohl für das Vorausrüsten als auch zur Applikation an der Montagestelle von Hülsen-Bolzen- und Gewindeteilpaarungen geeignet. Bei Großserienprodukten ist das Vorausrüsten die rationellste und sicherste Art, weil gewährleistet wird, dass am Montageort nur vorausgerüstete Teil standardisierter Qualität zur Verarbeitung gelangen.

Die Anwendung der erfindungsgemäßen Beschichtungsmassen erfolgt durch Auftragen auf die zu sichernden bzw. abzudichtenden Teile. Hierzu verwendet man übliche Verfahren, beispielsweise Sprühverfahren, Tauchverfahren, Streichverfahren etc. Bei lösungsmittel- oder wasserhaltigen Beschichtungsmassen schließt sich gegebenenfalls ein Trocknungsschritt an.

Nach dem Zusammenfügen von Hülsen und Bolzen oder Gewindeteilen, von denen mindestens ein Teil mit der erfindungsgemäßen Beschichtungsmasse versehen ist, erfolgt die Ausbildung der Sicherung oder Abdichtung im Spalt von Hülse-Bolzen oder Gewinden wie oben beschrieben durch Abbinden des Bindemittels. Wenn die Sicherung oder Abdichtung gelöst werden soll, wird die Antifressmitteleigenschaft aktiviert. Dies kann vor oder nach dem Losbrechen der Hülsen-Bolzen- oder Gewindeteile erfolgen. Zu diesem Zweck werden die Teile zumindest teilweise einer Temperatur ausgesetzt, die gleich der Zersetzungstemperatur der Komponente b) (Temperatur, bei welcher die Komponente b) Gase freisetzt) ist oder oberhalb dieser Temperatur liegt, die Temperatur wird für einen Zeitraum beibehalten, der ausreicht, die kohäsive und gegebenenfalls adhäsive Festigkeit der ausgehärteten Beschichtungsmasse zu reduzieren, und die Gewindeteile werden losgedreht. Die Teile können einer solchen Temperatur in üblicher Weise durch Erwärmen ausgesetzt werden. Zu diesem Zweck ist es bevorzugt, in die Beschichtungsmasse elektrisch leitfähige und/oder wärmeleitfähige Stoffe homogen aufzunehmen. Derartige Stoffe können in Form von Fasern, Partikeln, Mikrokugeln, Mikrohohlkörpern und/oder Drähten aus Metall oder anderen elektrisch- oder wärmeleitfähigen Stoffen vorliegen. Beispiele für brauchbare Stoffe sind dünne, kleine Metallplättchen, Metalldrähte, Graphit- oder sonstige Kohlenstofffasern, Mikrokugeln aus anorganischen Stoffen oder Polymeren, die mit leitfähigen Stoffen beschichtet sind, beispielsweise silberbeschichtete Silikate, und Mikrohohlkörper.
Durch die Gasbildung, die durch die Zersetzung der Komponente b) bewirkt wird, kommt es zu einer Reduzierung der kohäsiven und gegebenenfalls der adhäsiven Festigkeit der den Spalt füllenden abgebundenen Beschichtungsmasse. Dadurch wird die Gefahr des Fressens oder Verkeilens der Teile beim Losbrechen vermieden, so dass sich die Teile problemlos trennen und wieder verwenden lassen.

### Beispiele

Die Erfindung wird anhand der Beispiele 1 bis 13 (Tabelle 2) erläutert. Sie ist jedoch nicht auf diese Beispiele beschränkt.

### Herstellung der Beschichtungsmassen

### a) Physikalisch abbindende Massen auf der Basis wässriger Dispersionen und/oder Wasserglas.

Die Kunststoffdispersionen und Wassergläser liegen mit unterschiedlichen Feststoffgehalten (20 bis 70 Gew.-%) vor. Die jeweils notwendigen Mengen werden im Mischbehälter eines Planetenmischers mit Dispergator vorgelegt, gegebenenfalls wird der notwendige pH-Wert eingestellt. Füllstoff bzw. Rheologiemittel werden in Wasser aufgeschlämmt und angeteigt, ehe sie portionsweise den Dispersionen bzw. Wassergläsern zugesetzt und gut untergemischt werden. Konservierende Stoffe und andere Additive werden vorzugsweise über einen sogenannten Masterbatch eingearbeitet. Der Zusatz an Gase freisetzenden Stoffe und der reibwertmindernden Additive erfolgt vorzugsweise zum Schluss. Sobald diese Stoffe gut untergemischt sind, wird die Masse mit dem Dispergator homogen dispergiert und anschließend werden erforderlichenfalls die Endeigenschaften, wie Viskosität, pH-Wert, eingestellt.

### b) Schmelzmassen

Das Aufbereiten der Rohstoffe für Schmelzmassen kann diskontinuierlich in einem beheizbaren Schmelzkneter (Z-Arm-Kneter) oder kontinuierlich in einem beheizbaren 1- oder 2-Schneckenextruder erfolgen. Die Auswahl der Bindemittel erfolgt in Abstimmung mit den Zersetzungstemperaturen der Gase freisetzenden Stoffe. Der Schmelzpunkt bzw. Erweichungsbereich des Bindemittels liegt jeweils etwa 20 bis 25 °C unter dem Zersetzungspunkt der Gase freisetzenden Stoffe, um deren Wirksamkeit zu erhalten.

Die Rohstoffgranulate der Bindemittel werden im beheizten Schmelzkneter vorgelegt und innerhalb von 30 Minuten erwärmt und geschmolzen. Anschließend wird portionsweise die jeweilige Füllstoffmenge in die Schmelze eingearbeitet und zu einer homogenen Masse geknetet. Zum Schluss werden die Gase freisetzenden und reibwertmindernden Additive schnell homogen eingearbeitet.

Die fertige Schmelzmasse kann über 3 unterschiedliche Verfahrensschritte in Kleinstückformen überführt werden:
- Herstellen von Strängen durch Kühlen im Kühlbad, die anschließend zu Sticks geschnitten oder mittels einer Häckselvorrichtung granuliert werden
- Herstellen von Chips, Tropfen, Perlen und dergleichen über übliche Vorrichtungen, die auf ein gekühltes Band fallen
- Herstellen von Sticks durch Gießen in gekühlte Formen (analog der Lippenstiftherstellung)

### c) Chemisch reagierende Massen

Bei den chemisch reagierenden Massen handelt es sich um Ein-, Zwei- und Mehrkomponentensysteme, wobei die ersten beiden überwiegend genutzt werden. Bei den Zweikomponentensystemen (Epoxide, Polyurethane) werden die beiden Komponenten getrennt gemischt. Bei den Einkomponentensystemen handelt es sich entweder um sogenannten feuchtigkeitshärtende Produkte oder um solche, bei denen eine Reaktivkomponente mikroverkapselt ist.

Bei der Herstellung lassen sich wiederum Planetenmischer mit Dispergatoren verwenden. Zunächst werden die Bindemittel oder der Reaktionspartner, z.B. Härter, vorgelegt und der Füllstoff wird homogen eingearbeitet. Die Gase freisetzenden Stoffe und reibwertmindernden Additive können sowohl in eine oder getrennt in beide Komponenten eingearbeitet werden, sofern sie gegenüber den Reaktivkompoenten während der Lagerung inert bleiben.

Feuchtigkeitshärtende, reaktive Schmelzmassen, wie z.B. solche auf Polyurethanbasis, lassen sich analog den Schmelzmassen aufbereiten.

Bei Massen, die mikroverkapselte Bestandteile enthalten, ist es wichtig, die Einarbeitung am Schluss vorzunehmen, um eventuelle Schädigungen der Kapselwände durch die beim Mischen entstehenden Scherkräfte zu vermeiden.

### Anwendung der Beschichtungsmassen

Mit den Massen der Beispiele 1 bis 13 wurden Gewindeteilpaarungen ausgerüstet, wobei die Beispiele 2 und 4-7 als nicht zur Erfindung gehörend betrachtet werden.

Auswahl der Prüfkörper:
- Edelstahlschrauben, M 10 x 35, A2-70,, DIN 933
- Edelstahlmuttern, M 10, A2-70,DIN 934
- Stahlschrauben, M 10 x 35, 8.8 (Vergütungsschwarz) DIN 933
- Stahlmuttern, M 10 (Vergütungsschwarz) DIN 934

Vor der Anwendung werden alle Prüfkörper mit einem aliphatischen Kohlenwasserstoff gereinigt und anschließend 24 Stunden 24 Stunden gelagert.

Zum Beschichten der Gewindegänge der gereinigten Prüfschrauben, wurden diese einzeln an einem horizontal rotierenden Magnetblock befestigt und die Masse über mindestens 6 Gewindegänge gegossen. Nach homogener Verteilung der Masse wurde die Prüfschraube abgenommen und 24 Stunden/23 °C gelagert. Bei den wasser- und lösemittelhaltigen Massen konnten sie gleichzeitig trocknen.

Zum Beschichten mit Schmelzmassen (Beispiel 7 und 9) wurden die hergestellten Sticks in eine Handschmelzklebstoffpistole eingelegt und auf die Verarbeitungstemperatur 140 °C. (Beispiel 7) und 180 °C (Beispiel 9) erwärmt. Die zu beschichtenden Prüfschrauben wurden mit einem Heißluftfön auf etwa 60 bis 70 °C vorgewärmt.

Bei den chemisch reagierenden Massen wurden aus den Reaktionskomponenten in den Äquivalenzverhältnissen homogene Gemische hergestellt und innerhalb der Topfzeit Prüfkörper damit ausgerüstet. Während der Topfzeit blieb die Reaktionstemperatur der Massen aus den Beispielen 10 bis 12 unter 60 °C.

Beim Beispiel 13 handelt es sich um eine Masse auf Acrylatbasis zur Gewindesicherung und -dichtung, die mikroverkapseltes Acrylat und Peroxid enthält, der 5 Gew.-% mikroverkapseltes Hexogen (Additiv G10) und reibwertmindernde Additive R1 und R2 zugesetzt waren.

Mit jeder Masse sind 10 Prüfschrauben ausgerüstet worden, die 24 Stunden nach der Beschichtung bei 23 °C gelagert wurden.

Das Aufschrauben des Prüfgewindes und Verspannen der Gewindeverbindung erfolgte mit konstanter Drehgeschwindigkeit auf das beschichtete Außengewinde. Mit dem Drehmomentschlüssel wurde das Gegengewinde soweit angezogen, bis das vorgegebene Anzugsmoment (LM_{A}) erreicht war. Die Prüfkörper wurden weitere 24 Stunden/23 °C zum Abbinden der Masse gelagert. Parallel dazu wurden zum Vergleich eine analoge Anzahl an Prüfkörpern mit Massen nach den Beispielen 1 bis 13 ausgerüstet, die keine Gase freisetzenden oder reibwertmindernden Additive enthielten.

Zur Wirksamkeitsprüfung wurden die Prüfkörper vor der Prüfung einer Temperaturbelastung - wie sie in der Praxis vorgeschrieben ist - unterzogen, die als Temperaturbeaufschlagung bezeichnet ist. Die Ergebnisse der ermittelten Losbrech- und Weiterdrehmomente sind in Tabelle 3 zusammengefasst. Die Prüfergebnisse sind das arithmetische Mittel von jeweils 10 Prüfkörpern.

Die Losbrech- und Weiterdrehmomente der Prüfkörper aus Beispielen 1 bis 13 wurden auf dem Schraubenprüfstand (Modell-Nr. 5413-4102 der Firma Schatz) ermittelt. Die Drehzahlen betrugen beim Ermitteln des
- Losbrechmoments (LM_{B}) : 5 U/min
- Weiterdrehmoments (LM_{W}): 20 U/min
- Abdrehens: 50 U/min.

**Tabelle 2: Massezusammensetzungen**

| Beispiel Nr. (Gewichtsteile an Feststoffen) | | | | | | | | | | | | | |
|---|---|---|---|---|---|---|---|---|---|---|---|---|---|
| Rohstoffe 1) | 1 | 2 | 3 | 4 | 5 | 6 | 7 | 8 | 9 | 10 | 11 | 12 | 13 |
| Bindemittelbasis | | | | | | | | | | | | | |
| a) physikalisch abbindende - wässrige Dispersionen | | | | | | | | | | | | | |
| PVC | - | - | - | 45,0 | 45,0 | - | - | - | - | - | - | - | - |
| Acrylate und CP | 26,5 | 52,6 | 45,0 | - | - | - | - | - | - | - | - | - | - |
| Polyurethane | - | - | - | - | - | 30,0 | - | - | - | - | - | - | - |
| Ethylen-Vinylacetat-CP | - | - | - | - | - | - | - | 40,0 - | | - | - | - | - |
| Wasserglas | - | - | 55,0 | - | - | - | - | - | - | - | - | - | - |
| - Schmelzmassen | | | | | | | | | | | | | |
| Polyamid und CP | - | - | - | - | - | - | - | - | - | 45,0 | - | - | - |
| Ethylen-Vinylacetat-CP | - | - | - | - | - | - | 70,0 | - | - | - | - | - | -- |
| b) chemisch reagierende | | | | | | | | | | | | | |
| Epoxide | - | - | - | - | - | - | - | - | - | 35,0 | - | - | - |
| Polyurethane | - | - | - | - | - | - | - | - | - | - | 30,0 - | | - |
| Silicone | - | - | - | - | - | - | - | - | - | - | - | 35,0 | - |
| Acrylate und CP | - | - | - | - | - | - | - | - | - | - | - | - | 42,0 |
| Füllstoffe/Rheologiemittel | 73,5 | 47,4 | - | 55,0 | 55,0 | 70,0 | 30,0 | 60,0 | 55,0 | 65,0 | 70,0 | 65,0 | 58,0 |
| Gasefreisetzende Additive | | | | | | | | | | | | | |
| Additiv G 1 | - | 2,0 | - | 7,0 | - | - | - | - | - | - | - | - | - |
| Additiv G 2 | - | - | - | - | 8,0 | - | - | - | - | - | - | - | - |
| Additiv G 3 | - | - | - | - | - | 14,0 | - | - | - | - | - | - | - |
| Additiv G 4 | - | - | - | - | - | - | 13,5 | - | - | - | - | - | - |
| Additiv G 5 | - | - | - | - | - | - | - | - | 7, 0 | - | - | - | - |
| Additiv G 6 | - | - | - | - | - | - | - | - | - | - | - | 20,5 | - |
| Additiv G 7 | - | - | - | - | - | - | - | 8,5 | - | - | - | - | - |
| Additiv G 8 | - | - | - | - | - | - | - | - | - | - | - | 6,0 | - |
| Additiv G 9 | - | - | - | - | - | - | - | - | - | - | 2,7 | - | - |
| Additiv G 10 | - | - | - | - | - | - | - | - | - | - | - | - | 5, 0 |
| Additiv G 11 | - | - | - | - | - | - | - | - | - | 1,8 | - | - | - |
| Additiv G 12 | - | - | - | - | - | - | - | - | - | - | - | - | - |
| Additiv G 13 | 9,0 | 11,0 | 83,0 | - | - | - | 3,5 | - | - | - | - | - | - |
| Reibwertmindernde Additive(Gleitmittel) | | | | | | | | | | | | | |
| Additiv R1 | 18,0 | - | 42,0 | - | - | 12,0 | - | 10,0 | - | - | 5,3 | 10,5 | 8,0 |
| Additiv R 2 | - | - | - | 6,0 | 6,0 | - | 3,5 | - | 8,0 | - | - | 2,0 | 2,0 |
| Additiv R 3 | 19,0 | 58,5 | 130,0 | - | - | 10,0 | 5,5 | - | - | 8,2 | 12,0 | - | - |
| Additiv R 4 | - | - | - | - | - | - | - | 2,0 | 2,0 | - | - | - | - |

| | | | | | | | | | | | | | |
|---|---|---|---|---|---|---|---|---|---|---|---|---|---|
| ¹⁾ Verwendete Rohstoffe: | | | | | | | | | | | | | |

Physikalisch abbindende Bindemittel:
   PVC (Polyvinylchlorid): Vinnol-Dispersion 50 der Wacker-Chemie
   Acrylate und CP: Acronal® 85D der BASF AG
   Polyurethane: Dispercoll® U 54 der Bayer AG
   Ethylen-Vinylacetat-CP: Vinnapas® -Dispersion EP 1 der Wacker-Chemie
   Wasserglas: Natriumwasserglas 37/40 Be der Henkel KgaA
Schmelzmassen:
   Polyamid und CP: PEBAX® DER Elf-Atochem
   Ethylen-Vinylacetat-CP: ELVAX® der DuPont, Wilmington, Del.
chemisch reagierende Bindemittel:
   Epoxide: Epikote/Epicure® -System der Shell Chemical
   Polyurethane: Desmodur/Desmophen® der Bayer AG
   Silicone: Silopren® der GE/Bayer GmbH
   Acrylate und CP: PRECOTE® , mikroverkapseltes Epoxy-Acrylat-CP der Omnitechnik Mikroverkapselungs GmbH
   Füllstoffe/Rheologieadditive: Aluminiumoxid.
Gasefreisetzende Additive (G1 bis G 13):
   - G 1 =: Azodicarbonamid
   - G 2 =: Azodicarbonamid, modifiziert POROFOR® der BAYER AG
   - G 3 =: 4,4' Oxibis(benhzolsulfohydrazid), Hersteller: Uniroyal Chemical, USA
   - G 4 =: Diphenylenoxid-4,4'disulfohydrazid Hersteller: Bayer AG
   - G 5 =: Phenyltetrazol Hersteller: Stepan Chemical Co., USA
   - G 6 =: Isatosäureanhydrid Hersteller: Bayer AG
   - G 7 =: Malonsäure Hersteller: Feinchemikalien
   - G 8 =: Oxalessigsäure Hersteller: Feinchemikalien
   - G 9 =: Tetryl
   - G 10 =: Hexogen
   - G 11 =: Octogen
   - G 12 =: Expancel Hersteller: Akzo Nobel
   - G 13 =: Calciumcarbonat Hersteller: Omya GmbH
Reibwertmindernde Additive (Gleitmittel):
   - R 1 =: Polyethylenpulver (PE-Wachs) Ceridust® der Clariant
   - R 2 =: Polytetrafluorethylenpulver (PTFE Teflonpulver der Dupont
   - R 3 =: Graphit Pudergraphit der Kropfmühle AG
   - R 4:: Molybdänisulfid Hersteller: Dow Corning

   - CP =: Copolymer

### Tabelle 3: Losbrech- und Weiterdrehmomente (DIN 267, Teil 27) nach Temperaturbeaufschlagung

Gewindeteilpaarung:
¹⁾ Edelstahl/Edelstahl
   - Prüfschrauben: M 10 x 35, A 2-70, DIN 933
   - Prüfmuttern: M 10, A 2-70, DIN 934
²⁾ Stahl/Stahl
   - Prüfschrauben: M 10 x 35 8.8 (Vergütungsschwarz) DIN 933
   - Prüfmuttern: M 10, 10 (Vergütungsschwarz) DIN 934

| | Anzugsmoment (LM_{B}) | Losbrechmoment (LM_{B}) | | Weiterdrehmoment (LM_{W}) | | Temperaturbeaufschlagung und Zeit | |
|---|---|---|---|---|---|---|---|
| Beispiel Nr. | | Komponente b) | | Komponente c) | | | |
| | Nm | ohne Nm | mit Nm | ohne Nm | mit Nm | °C | Stunden |
| 1 | 40¹) | 117,0 | 70,0 | gefressen | 1 | 500 | 100,0 |
| 2 | 40¹) | 130,0 | 42,0 | gefressen | 1 | 500 | 100,0 |
| 3 | 40¹⁾ | 90,0 | 75,0 | gefressen | 1 | 500 | 100,0 |
| 4 | 46²⁾ | 125,0 | 90,0 | 760,0 | 15,0 | 220 | 0,5 |
| 5 | 46²⁾ | 130,0 | 90,0 | 60,0 | 10,0 | 160 | 0,3 |
| 6 | 46²⁾ | 80, | 65,0 | 50,0 | 8,0 | 170 | 1,5 |
| 7 | 40¹⁾ | 45,0 | 35,0 | 60,0 | 12,0 | 170/500 | 0,5/5 |
| 8 | 46²⁾ | 42,0 | 30,0 | 40,0 | 5,0 | 155 | 1 |
| 9 | 40¹⁾ | 60,0 | 40,0 | 45,0 | 15,0 | 260 | 2 |
| 10 | ohne ¹⁾ | 31,0 | 16,0 | 20,0 | 12, 0 | 230 | 2,0 |
| 11 | ohne ²⁾ | 33, 0 | 20,0 | 18,0 | 1 | 230 | 2,0 |
| 12 | ohne ²⁾ | 40, 0 | 15, 0 | 12,0 | 1 | 240 | 2, 0 |
| 13 | 46²⁾ | 63,0 | 48,0 | 31,0 | 12,0 | 250 | 1,5 |

Es ist ersichtlich, dass bei Verwendung der erfindungsgemäßen Beschichtungsmassen das Losbrech- und Weiterdrehmoment und damit auch die Gefahr des Fressens oder Verkeilens der Gewindeteile erheblich geringer sind als bei Verwendung von Beschichtungsmassen ohne Komponente b) oder c).

## Patentansprüche

1. Beschichtungsmasse mit Antifresseigenschaften für lösbare Hülsen-Bolzen- und/oder Gewindeteilpaarungen, umfassend
a) mindestens ein chemisch reagierendes und/oder inertes Bindemittel,
b) mindestens eine Substanz, die bei erhöhter Temperatur Gase freisetzt, ausgewählt unter Tetrazolen, Benzoxazinen, Peroxoverbindungen, Persäuren und Salzen davon, anorganischen Carbonaten und Hydrogencarbonaten, Explosivstoffen und Alkalimetall- und Ammoniumaziden, Malonsäure, α-Ketocarbonsäuren, β-Ketocarbonsäuren, α, α ,α, -Trihalogencarbonsäuren, Glyceridcarbonsäuren, β-γ-ungesättigten Carbonsäuren, β-Hydroxycarbonsäuren, β-Lactonen und Carbonsäureanhydriden.
c) mindestens ein reibwertverminderndes Additiv.

2. Beschichtungsmasse nach Anspruch 1, wobei die Komponente b) eine Gasausbeute von ≥ 50 ml/g ergibt.

3. Beschichtungsmasse nach Anspruch 1, wobei die Komponente b) ausgewählt ist unter Hexahydro-1,2,3-trinitro-1,3,4-triazin, N-Methyl-N,2,4,6-Tetranitroanilin und 2,4,6-Trinitrophenol.

4. Beschichtungsmasse nach Anspruch 1, wobei die Komponente b) ausgewählt ist unter anorganischen Carbonaten und Hydrogencarbonaten.

5. Beschichtungsmasse nach Anspruch 1, wobei die Komponente b) in mikroverkapselter Form vorliegt.

6. Beschichtungsmasse nach Anspruch 1, wobei das reibwertvermindernnde Additiv ausgewählt ist unter Graphiten, Metallsulfiden, Polyolefinen und fluorierten Polyolefinen.

7. Beschichtungsmasse nach Anspruch 6, wobei das reibwertvermindernde Additiv ausgewählt ist unter Polyethylen, Polytetrafluorethylen, Graphit und Molybdändisulfid.

8. Beschichtungsmasse nach Anspruch 1, wobei die Komponente
a) ausgewählt ist unter reaktiven Monomeren oder reaktiven Polymeren oder Copolymeren mit einem mittleren Molekulargewicht im Bereich von 300 bis 25000.

9. Beschichtungsmasse nach Anspruch 8, wobei die Komponente
a) ausgewählt ist unter (Meth)acrylharzen, Epoxyharzen und Polyurethanen mit Isocyanatgruppen.

10. Beschichtungsmasse nach Anspruch 1, wobei die Komponente
a) ausgewählt ist unter inerten thermoplastischen Polymeren und Copolymeren.

11. Beschichtungsmasse nach Anspruch 10, wobei die Komponente
a) ausgewählt ist unter Polyolefinen, Polyamiden gesättigten Polyestern, Poly (meth) acrylaten und Copolymeren davon.

12. Beschichtungsmasse nach Anspruch 1, wobei das Bindemittel ein anorganisches Bindemittel ist.

13. Beschichtungsmasse nach Anspruch 12, wobei das anorganische Bindemittel ausgewählt ist unter Wasserglas, Zement, Kalk und Gips.

14. Beschichtungsmasse nach Anspruch 1, die elektrisch leitfähige oder wärmeleitfähige Stoffe in Form von Fasern, Partikeln, Mikrokugeln, Mikrohohlkörpern und/oder Drähten umfasst.

15. Verfahren zum Lösen einer mit einer abgebundenen Beschichtungsmasse nach Anspruch 1 gesicherten oder abgedichteten Hülsen-Bolzen- oder Gewindeverbindung, wobei man die Hülsen-Bolzen- oder Gewindeverbindung oder ein Werkstück, das eine derartige Hülsen-Bolzen- oder Gewindeverbindung umfasst, zumindest teilweise einer Temperatur aussetzt, bei welcher die Komponente b) Gase freisetzt, die Temperatur für einen Zeitraum beibehält, der ausreicht, die kohäsive und gegebenenfalls adhäsive Festigkeit der ausgehärteten Beschichtungsmasse zu reduzieren, und die Gewindeteile losdreht.

## Claims

1. Coating composition having anti-seize properties for socket-pin or threaded connections, comprising
a) at least one chemically reacting and/or inert binder,
b) at least one substance that releases gases at elevated temperature, said substance being selected from tetrazoles, benzoxazines, peroxo compounds, peracids and salts thereof, inorganic carbonates and hydrogen carbonates, explosive substances and alkali metal and ammonium azides, malonic acid, α-ketocarboxylic acids, β-ketocarboxylic acids, α,α,α-trihalocarboxylic acids, glyceride carboxylic acids, *β,γ-*unsaturated carboxylic acids, β-hydroxycarboxylic acids, β-lactones and carboxylic acid anhydrides.
c) at least one friction-reducing additive.

2. Coating composition according to claim 1, wherein component b) gives a gas yield of ≥ 50 ml/g.

3. Coating composition according to claim 1, wherein component b) is selected from hexahydro-1,2,3-trinitro-1,3,4-triazine, N-methyl-N,2,4,6-tetranitroaniline and 2,4,6-trinitrophenol.

4. Coating composition according to claim 1, wherein component b) is selected from inorganic carbonates and hydrogen carbonates.

5. Coating composition according to claim 1, wherein component b) is in microencapsulated form.

6. Coating composition according to claim 1, wherein the friction-reducing additive is selected from graphites, metal sulfides, polyolefins and fluorinated polyolefins.

7. Coating composition according to claim 6, wherein the friction-reducing additive is selected from polyethylene, polytetrafluoroethylene, graphite and molybdenum disulfide.

8. Coating composition according to claim 1, wherein component a) is selected from reactive monomers or reactive polymers or copolymers having an average molecular weight in the range from 300 to 25 000.

9. Coating composition according to claim 8, wherein component a) is selected from (meth)acrylic resins, epoxy resins and polyurethanes containing isocyanate groups.

10. Coating composition according to claim 1, wherein component a) is selected from inert thermoplastic polymers and copolymers.

11. Coating composition according to claim 10, wherein component a) is selected from polyolefins, polyamides, saturated polyesters, poly(meth)acrylates and copolymers thereof.

12. Coating composition according to claim 1, wherein the binder is an inorganic binder.

13. Coating composition according to claim 12, wherein the inorganic binder is selected from waterglass, cement, lime and gypsum.

14. Coating composition according to claim 1, which comprises electrically conductive or thermally conductive substances in the form of fibers, particles, microbeads, hollow microbodies and/or wires.

15. Method of disassembling a socket-pin connection or threaded connection sealed or locked with a set coating composition according to claim 1, wherein the socket-pin or threaded connection or a workpiece comprising such a socket-pin or threaded connection is exposed at least in part to a temperature at which component b) releases gases, the temperature is maintained for a period sufficient to reduce the cohesive and, if appropriate, adhesive strength of the cured coating composition, and the threaded parts are unscrewed.

## Revendications

1. Produit de revêtement à propriétés antigrippantes pour appariements amovibles manchons-boulons et/ou éléments filetés, comprenant :
a) au moins un liant réagissant chimiquement et/ou inerte ;
b) au moins une substance dégageant des gaz à température accrue, choisie parmi les tétrazoles, les benzoxazines, les composés peroxo, les peracides et leurs sels, les carbonates et les hydrogénocarbonates inorganiques, les explosifs, les trinitrures de métal alcalin et d'ammonium, l'acide malonique, les acides α-cétocarboxyliques, les acides β-cétocarboxyliques, les acides α,α,α-trihalogéno-carboxyliques, les acides glycéridecarboxyliques, les acides carboxyliques β,γ-insaturés, les acides β-hydroxycarboxyliques, les β-lactones et les anhydrides d'acide carboxylique ;
c) au moins un additif réduisant le coefficient de frottement.

2. Produit de revêtement selon la revendication 1, dans lequel le composant b) donne lieu à un rendement de gaz égal ou supérieur à 50 ml/g.

3. Produit de revêtement selon la revendication 1, dans lequel le composant b) est choisi parmi l'hexahydro-1,2,3-trinitro-1,3,4-triazine, la N-méthyl-N,2,4,6-tétranitroaniline et le 2,4,6-trinitrophénol.

4. Produit de revêtement selon la revendication 1, dans lequel le composant b) est choisi parmi les carbonates et les hydrogénocarbonates inorganiques.

5. Produit de revêtement selon la revendication 1, dans lequel le composant b) se présente sous une forme microencapsulée.

6. Produit de revêtement selon la revendication 1, dans lequel l'additif réduisant le coefficient de frottement est choisi parmi les graphites, les sulfures métalliques, les polyoléfines et les polyoléfines fluorées.

7. Produit de revêtement selon la revendication 6, dans lequel l'additif réduisant le coefficient de frottement est choisi parmi le polyéthylène, le polytétrafluoréthylène, le graphite et le disulfure de molybdène.

8. Produit de revêtement selon la revendication 1, dans lequel le composant a) est choisi parmi les monomères réactifs ou parmi des polymères réactifs ou des copolymères réactifs ayant un poids moléculaire moyen compris entre 300 et 25 000.

9. Produit de revêtement selon la revendication 8, dans lequel le composant a) est choisi parmi les résines (méth)acryliques, les résines époxy et les polyuréthanes comportant des groupes isocyanate.

10. Produit de revêtement selon la revendication 1, dans lequel le composant a) est choisi parmi les polymères et les copolymères thermoplastiques inertes.

11. Produit de revêtement selon la revendication 10, dans lequel le composant a) est choisi parmi les polyoléfines, les polyamides, les polyesters saturés, les poly(méth)acrylates et leurs copolymères.

12. Produit de revêtement selon la revendication 1, dans lequel le liant est un liant inorganique.

13. Produit de revêtement selon la revendication 12, dans lequel le liant inorganique est choisi parmi le verre soluble, le ciment, la chaux et le gypse.

14. Produit de revêtement selon la revendication 1, comprenant des substances électroconductrices ou thermoconductrices sous la forme de fibres, de particules, de microbilles, de corps creux microscopiques et/ou de fils.

15. Procédé pour desserrer une jonction manchons-boulons ou filetages, protégée ou rendue étanche par un produit de revêtement lié selon la revendication 1, dans lequel on soumet la jonction par manchons-boulons ou filetages - ou une pièce à usiner qui comprend une telle jonction manchons-boulons ou filetages - au moins partiellement à une température à laquelle le composant b) dégage des gaz, on maintient la température fixe pendant un intervalle de temps suffisant pour réduire la résistance cohésive et le cas échéant adhésive du produit de revêtement durci, et l'on desserre les éléments filetés.
